# EUROPEAN PATENT APPLICATION

(11) **EP 4 582 943 A1**
(43) Date of publication of application: **09.07.2025**
(21) Application number: 23867006.1
(22) Date of filing: 15.06.2023
(51) Int. Cl.: G06F 9/455

(54) **PAGE SWAP-IN METHOD AND APPARATUS**

(30) Priority: 20.09.2022 CN 202211142315
(71) Applicant: Huawei Technologies Co., Ltd., Shenzhen, Guangdong 518129 (CN)
(72) Inventor: ZHONG, Kan, Shenzhen, Guangdong 518129 (CN); CUI, Wenlin, Shenzhen, Guangdong 518129 (CN)
(74) Representative: Maiwald GmbH
(86) International application number: PCT/CN2023/100492
(87) International publication number: WO 2024/060710

(57) **Abstract**

A page swap in method and apparatus are provided. In this application, a DPU in a host swaps a page from a storage device to an internal memory of the host in place of a processor in the host. The DPU in the host receives a swap in instruction, where the swap in instruction instructs to swap a target page to the internal memory of the host. After receiving the swap in instruction, the DPU obtains the target page from the storage device, swaps the target page to the internal memory, and notifies the host (for example, the processor or an MMU in the host) that the target page has been swapped to the internal memory. A page swap in operation may be performed by the DPU, and the processor in the host no longer needs to swap the target page from the storage device to the internal memory of the host, to effectively release compute power of the processor, and reduce processor occupation of the page swap in operation, thereby ensuring execution efficiency of service work in the host.

## Description

### CROSS-REFERENCE TO RELATED APPLICATIONS

This application claims priority to Chinese Patent Application No. 202211142315.0, filed with the China National Intellectual Property Administration on September 20, 2022 and entitled "PAGE SWAP IN METHOD AND APPARATUS", which is incorporated herein by reference in its entirety.

### TECHNICAL FIELD

This application relates to the field of communication technologies, and in particular, to a page swap in method and apparatus.

### BACKGROUND

To expand an internal memory of a host, a processor in the host may swap inactive pages in the internal memory of the host to a swap area, to release space of the internal memory of the host, thereby expanding the internal memory of the host. The swap area is considered as a virtual internal memory, and the swap area is usually located in a hard disk of the host.

When the processor in the host needs to invoke the pages swapped to the swap area, the processor obtains the pages from the swap area, and swaps the pages to the internal memory of the host.

However, a processor resource is occupied when the pages are swapped from the swap area to the internal memory of the host, and consequently the processor cannot provide a large amount of compute power to support service work in the host.

### SUMMARY

This application provides a page swap in method and apparatus, to reduce processor occupation of a page swap in operation.

According to a first aspect, this application provides a page swap in method. In the method, an acceleration apparatus connected to a communication system bus of a host swaps a page from a storage device to an internal memory of the host in place of a processor in the host. In the method, the acceleration apparatus in the host receives a swap in instruction, where the swap in instruction instructs to swap a target page to the internal memory of the host. After receiving the swap in instruction, the acceleration apparatus obtains the target page from the storage device, swaps the target page to the internal memory, and notifies the host (for example, the processor or an MMU in the host) that the target page has been swapped to the internal memory.

According to the foregoing method, the page swap in operation may be performed by the acceleration apparatus, and the processor in the host no longer needs to swap the target page from the storage device to the internal memory of the host, to effectively release compute power of the processor, and reduce processor occupation of the page swap in, thereby ensuring execution efficiency of service work in the host.

In a possible implementation, the acceleration apparatus may receive the swap in instruction from the processor in the host or the MMU in the host. For example, when finding a page fault in a PT, the MMU may send the swap in instruction to the acceleration apparatus. After the acceleration apparatus swaps the target page to the internal memory of the host, the acceleration apparatus notifies the MMU that the target page has been swapped to the internal memory. For another example, when determining that the internal memory has sufficient internal memory space, the processor may send the swap in instruction to the acceleration apparatus. After the acceleration apparatus swaps the target page to the internal memory of the host, the acceleration apparatus notifies the processor that the target page has been swapped to the internal memory.

According to the foregoing method, the processor and the MMU in the host can swap the target page to the internal memory of the host through the acceleration apparatus only by sending the swap in instruction, without participation of the processor. A page swap in manner is simpler and faster.

In a possible implementation, when obtaining the target page from the storage device, the acceleration apparatus first obtains a correspondence between a virtual address of the target page and a swap address of the target page, where the swap address of the target page is an address of the target page in the storage device. After obtaining the correspondence, the acceleration apparatus determines the swap address of the target page based on the correspondence, and then obtains the target page from the storage device based on the swap address of the target page. The acceleration apparatus may communicate with the storage device, and send, to the storage device, a data request that carries the swap address of the target page, to request to obtain the target page. After receiving the data request, the storage device may feed back the target page to the acceleration apparatus.

According to the foregoing method, after obtaining the correspondence, the acceleration apparatus can obtain the swap address of the target page by using the correspondence, to communicate with the storage device to request to obtain the target page.

In a possible implementation, the storage device can provide storage space as a virtual internal memory of the host. The storage device may be a storage device that is deployed outside the host and that is connected to the host through a network. Alternatively, the storage device may be a local storage device of the host. Alternatively, the storage device may be deployed in a cloud. For example, the storage device may be storage space pre-allocated to the host in a private cloud or a public cloud.

According to the foregoing method, the storage device has a plurality of specific forms, so that an applicable scenario of the page swap in method is effectively extended.

In a possible implementation, the correspondence may be recorded when the acceleration apparatus swaps the target page from the internal memory to the storage device. Alternatively, the correspondence may be obtained by the acceleration apparatus from the processor of the host, and the correspondence may be recorded when the processor swaps the target page from the internal memory to the storage device.

According to the foregoing method, the acceleration apparatus obtains the correspondence in a plurality of manners, so that this is applicable to different scenarios.

In a possible implementation, the host further includes the processor. The acceleration apparatus is connected to the processor through a system bus. When swapping the target page to the internal memory, the acceleration apparatus may receive a notification sent by the processor, where the notification indicates a physical address configured by the processor for the target page in the internal memory. After obtaining the physical address, the acceleration apparatus may write the target page to the physical address through DMA.

According to the foregoing method, after obtaining the physical address, the acceleration apparatus may write the target page to the internal memory through DMA, to bypass the processor, thereby further reducing processor occupation.

In a possible implementation, before the acceleration apparatus receives the swap in instruction, the acceleration apparatus may further perform a swap out operation of the target page. For example, the acceleration apparatus receives a swap out instruction sent by the processor of the host, where the swap out instruction instructs to swap the target page in the internal memory of the host to the storage device, and the swap out instruction includes the virtual address of the target page and the target page. After receiving the swap out instruction, the acceleration apparatus swaps the target page to the storage device, and records the correspondence.

According to the foregoing method, the acceleration apparatus undertakes main operations of page swap in and page swap out, so that processor occupation can be reduced, thereby ensuring that the processor of the host can provide sufficient compute power to support service work.

In a possible implementation, the acceleration apparatus further has a data decompression function. When the acceleration apparatus obtains a compressed target page from the storage device, the acceleration apparatus decompresses the compressed target page to obtain the target page, and then swaps the target page to the internal memory of the host.

According to the foregoing method, the acceleration apparatus may self-decompress the compressed target page, without participation of the processor, thereby further releasing compute power of the processor.

In a possible implementation, when the acceleration apparatus swaps the target page to the storage device, to reduce storage space occupied by the target page, the acceleration apparatus compresses the target page, and then swaps a compressed target page to the storage device.

According to a second aspect, this application further provides a page swap in apparatus. The page swap in apparatus has a function of implementing the behavior in the method instance in the first aspect. For beneficial effects, refer to the descriptions of the first aspect. Details are not described herein again. The function may be implemented by using hardware, or may be implemented by executing corresponding software by using hardware. The hardware or software includes one or more units corresponding to the foregoing function. In a possible design, a structure of the apparatus includes a receiving module (configured to receive a swap in instruction or a swap out instruction) and a swap out module (configured to swap the target page to a storage device). Optionally, the apparatus further includes a swap in module (configured to swap the target page from the storage device to an internal memory of a host). These modules may perform corresponding functions of a DPU in the method example in the first aspect. For details, refer to the detailed descriptions in the method example. Details are not described herein again.

According to a third aspect, this application further provides an acceleration apparatus. The acceleration apparatus includes a processor that has a processing function, such as a DPU, a GPU, an NPU, or a TPU. The foregoing enumerated processor types are merely examples. A specific type of the processor included in the acceleration apparatus is not limited in this application. The following provides descriptions by using only an example in which the processor included in the acceleration apparatus is a DPU. Optionally, the acceleration apparatus further includes a power supply circuit and a memory. The power supply circuit is configured to supply power to the DPU.

In a possible implementation, the DPU has a function of implementing behavior of a DPU in the method instance in the first aspect and the possible implementations of the first aspect. For beneficial effects, refer to the descriptions of the first aspect. Details are not described herein again.

In another possible implementation, the memory stores computer program instructions, the DPU is coupled to the memory, and the DPU may invoke the computer-executable instructions stored in the memory, to perform a method performed by a DPU in the first aspect and the possible implementations of the first aspect.

According to a fourth aspect, an embodiment of this application further provides a computing device. The computing device may be the host mentioned in the first aspect. For beneficial effects, refer to the descriptions of the first aspect. Details are not described herein again. The computing device includes an acceleration apparatus and an internal memory.

The acceleration apparatus receives a swap in instruction, where the swap in instruction instructs to swap a target page to the internal memory of the computing device. After receiving the swap in instruction, the acceleration apparatus obtains the target page from a storage device; and swaps the target page to the internal memory, and notifies the computing device that the target page has been swapped to the internal memory.

In a possible implementation, the acceleration apparatus receives the swap in instruction from a processor or an MMU of the computing device.

In a possible implementation, when obtaining the target page from the storage device, the acceleration apparatus first obtains a correspondence between a virtual address of the target page and a swap address of the target page, where the swap address of the target page is an address of the target page in the storage device. The acceleration apparatus determines the swap address of the target page based on the correspondence. The acceleration apparatus communicates with the storage device, and obtains the target page from the storage device based on the swap address of the target page.

In a possible implementation, the storage device is a storage device that is deployed outside the computing device and that is connected to the computing device through a network, is a local storage device of the computing device, or is storage space allocated to the computing device in a public cloud or a private cloud.

In a possible implementation, the correspondence is recorded when the acceleration apparatus swaps the target page from the internal memory to the storage device. Alternatively, the correspondence may be obtained by the acceleration apparatus from the processor of the computing device, and the correspondence may be recorded when the processor swaps the target page from the internal memory to the storage device.

In a possible implementation, the computing device further includes the processor, and the acceleration apparatus is connected to the processor through a system bus.

When the acceleration apparatus swaps the target page to the internal memory, the processor may send a notification to the acceleration apparatus, where the notification indicates a physical address configured by the processor for the target page in the internal memory. After receiving the notification, the acceleration apparatus writes the target page to the physical address through DMA.

In a possible implementation, the processor of the computing device sends a swap out instruction to the acceleration apparatus, where the swap out instruction instructs to swap the target page in the internal memory of the computing device to the storage device, and the swap out instruction includes the virtual address of the target page and the target page.

After receiving the swap out instruction, the acceleration apparatus swaps the target page to the storage device, and records the correspondence.

In a possible implementation, the acceleration apparatus obtains a compressed target page from the storage device, decompresses the compressed target page to obtain the target page, and swaps the target page to the internal memory.

In a possible implementation, when swapping the target page to the storage device, the acceleration apparatus compresses the target page, and then swaps a compressed target page to the storage device.

According to a fifth aspect, this application provides a data processing system. The data processing system includes a host and a storage device, the storage device communicates with the host through an internal bus or a network, and an acceleration apparatus is disposed in the host.

The host sends a swap out instruction to the acceleration apparatus, where the swap out instruction includes data. After obtaining the data from a swap in instruction, the acceleration apparatus compresses the data, and stores compressed data in an internal memory of the acceleration apparatus, or stores compressed data in an internal memory of the host. The acceleration apparatus compresses the data, so that space occupied by the data in the internal memory of the acceleration apparatus or the internal memory of the host is reduced, thereby improving utilization of the internal memory of the acceleration apparatus or the internal memory of the host.

In a possible implementation, the compressed data is stored in the internal memory of the acceleration apparatus, and the acceleration apparatus may migrate the compressed data to the storage device when free internal memory space in the internal memory of the acceleration apparatus is less than a first free threshold or when access frequency of the compressed data is lower than a threshold. In this way, occupation for the internal memory of the acceleration apparatus can be reduced.

In a possible implementation, the compressed data is stored in the internal memory of the host, and the acceleration apparatus may migrate the compressed data to the internal memory of the acceleration apparatus when free internal memory space in the internal memory of the host is less than a second free threshold or when access frequency of the compressed data is lower than a threshold. In this way, occupation for the internal memory of the host can be reduced.

In a possible implementation, the host sends a swap in instruction to the acceleration apparatus, where the swap in instruction instructs to obtain the data. After receiving the swap in instruction, the acceleration apparatus obtains the compressed data, decompresses the compressed data, and stores decompressed data in the internal memory of the host after decompression.

In a possible implementation, if the compressed data has been migrated to the storage device, the acceleration apparatus obtains the compressed data from the storage device. If the compressed data is stored in the internal memory of the acceleration apparatus or the internal memory of the host, the acceleration apparatus may obtain the compressed data from the internal memory of the acceleration apparatus or the internal memory of the host.

According to a sixth aspect, this application further provides a computer-readable storage medium. The computer-readable storage medium stores instructions. When the instructions are run on a computer, the computer is enabled to perform the method in the first aspect and the possible implementations of the first aspect.

According to a seventh aspect, this application further provides a computer program product including instructions. When the computer program product is run on a computer, the computer is enabled to perform the method in the first aspect and the possible implementations of the first aspect.

According to an eighth aspect, this application further provides a computer chip. The chip is connected to a memory, and the chip is configured to read and execute a software program stored in the memory, to perform the method in the first aspect and the possible implementations of the first aspect.

### BRIEF DESCRIPTION OF DRAWINGS

FIG. 1 is a diagram of a virtualization architecture of a host according to this application;
FIG. 2 is a diagram of a structure of a host according to this application;
FIG. 3 is a diagram of a page swap out method according to this application;
FIG. 4 is a diagram of a page swap in method according to this application; and
FIG. 5 is a diagram of a structure of a page swap in apparatus according to this application.

### DESCRIPTION OF EMBODIMENTS

Before a page swap in method and apparatus provided in embodiments of this application are described, some concepts in this application are described.
(1). Virtualization technology, compute instance, container (container), and virtual machine (virtual machine, VM).

Virtualization (virtualization) is a resource management technology. Various physical resources of a host, such as a processor, an internal memory, and an interface, are abstracted and converted by using the virtualization technology before presentation. Virtualization is a resource configuration method based on logic, and is logical abstraction of physical resources.

The host can form, on the host by using the virtualization technology, a software module that has an independent running environment. In embodiments of this application, the software module that is formed on the host and that has the independent running environment is referred to as a compute instance. The compute instance may be a virtual machine, or may be a container.

The virtual machine is a "complete computer" that is obtained through emulation by using the virtualization technology, has complete hardware system functions, and runs in a completely isolated environment. Any work that can be completed in a physical computer can be implemented in the virtual machine. The virtual machine has a processor (the processor is also referred to as a virtual processor), an internal memory, a hard disk, and other components. The processor, the internal memory, the hard disk, and the other components of the virtual machine are all virtualized from a processor, an internal memory, a hard disk, and other components of the host. An operating system is installed on the virtual machine, and the operating system on the virtual machine is independent of an operating system of the host. To distinguish between the two different operating systems, the operating system on the host is usually referred to as a host operating system (host operating system, hostOS), and the operating system on the virtual machine is usually referred to as a guest operating system (guest operating system, guestOS).

The container is an independent running environment obtained through emulation by using the virtualization technology. The container is similar to a lightweight sandbox, and shields software and hardware outside the container. The container implements virtualization at an operating system level and directly reuses the operating system on the host.

For the host, the compute instance is considered as a special "process". The "process" executes a compute task and occupies the processor, the internal memory, the hard disk, and other resources of the host.

For example, the host operating system configures, for the compute instance, internal memory space dedicated to the compute instance, and the compute instance occupies the internal memory space, to support a compute task that needs to be executed by the compute instance.

(2). Memory management unit (memory management unit, MMU).

The MMU is also referred to as a paged memory management unit (paged memory management unit, PMMU). In a host, the MMU is a hardware apparatus located between a kernel of a processor and a bus that connects a cache and an internal memory. Alternatively, the MMU is usually considered as a part of the processor. In this case, an operation performed by the MMU may be considered as an operation performed by the processor. In embodiments of this application, only an example in which the MMU is an independent hardware apparatus is used for description. The MMU is mainly configured to process an access request initiated by the processor for the internal memory. The MMU has an address translation function, and can implement translation between a virtual address of the internal memory and a physical address of the internal memory. For example, the MMU can parse an access request sent by the processor, and translate, into a physical address of the internal memory, a virtual address that is of the internal memory and that is carried in the access request, to write, to the physical address of the internal memory, data carried in the access request (the access request is used to request to write the data to the virtual address of the internal memory); or read data from the physical address of the internal memory, and feed back the data to the processor (the access request is used to request to read the data in the virtual address of the internal memory). In addition, the MMU has an internal memory protection function and a cache control function for the processor.

The MMU may manage space of the internal memory by using a page as a granularity (paged memory management). In managing the space of the internal memory by using the page as the granularity, the space of the internal memory is divided to blocks of a fixed size, and one block is one page. The MMU can allocate, manage, and protect the internal memory in pages.

To implement translation from a virtual address to a physical address, the MMU needs to obtain an address translation table. The address translation table is referred to as a page table (page table, PT). The page table includes one or more page table entries (page table entry, PTE). Each page table entry corresponds to one page, and records a correspondence between a virtual address of the page and a physical address of the page and some control information. The address translation table is maintained by a host operating system and stored in the internal memory of the host. To be specific, the host operating system can perform some update operations such as page table entry adding, page table entry deletion, and page table entry modification on the PT, and store an updated page table in the internal memory of the host. When the MMU needs to perform address translation, the MMU invokes the PT from the internal memory of the host.

Virtual addresses of pages used by different processes running on the host may be the same. To avoid confusion between virtual addresses used by different processes, in the host, the host operating system maintains a corresponding PT for each process (the process herein also includes a compute instance) on the host.

A compute instance is used as an example. A PT corresponding to the compute instance records a mapping relationship between a virtual address and a physical address of space that is of the internal memory of the host and that is occupied by the compute instance. Table 1 shows an abstract table of a PT according to an embodiment of this application. In Table 1, the PT is abstracted as a table, and each row in the table indicates one PTE. Each row records a virtual address (virtual address, VA) of a page and a physical address (physical address, PA) of the page, and the PTE further includes a flag bit. The flag bit identifies whether the PTE is accessed. In this embodiment of this application, if the flag bit is 1, it indicates that the PTE is accessed, and if the PTE is accessed, it indicates that internal memory space indicated by the physical address in the PTE is accessed; and if the flag bit is 0, it indicates that the PTE is not accessed, and if the PTE is accessed, it indicates that the internal memory space indicated by the physical address in the PTE is not accessed. Each time the MMU reads the PTE, the MMU sets the flag bit in the PTE to 1. If the PTE is not read again within specific time after the flag bit is set to 1, the flag bit of the PTE is automatically reversed to 0.

**Table 1**

| | Virtual address | Physical address | Flag bit |
|---|---|---|---|
| PTE | V1 | P1 | 1 |
| PTE | V2 | P2 | 0 |
| | ... | ... | ... |

When a compute instance needs to write data to a virtual address V1, the compute instance sends an access request 1 to the MMU (from a perspective of hardware interaction, the access request 1 is sent by the processor to the MMU). The access request 1 is used to request to write the data to the virtual address V1, and the access request 1 further carries the virtual address V1 of a page and the data that needs to be written. After receiving the access request 1, the MMU finds a PT corresponding to the compute instance, and determines, through searching, whether a physical address corresponding to the virtual address V1 exists in the PT. If the MMU does not find, in the PT, a PTE that records the virtual address V1, the MMU triggers a page fault (page fault) procedure, and sends, to the host operating system, an exception signal indicating a page fault. The host operating system allocates, in the internal memory, a segment of free internal memory space (a free page) to the compute instance, and a physical address P1 of the internal memory space is used as the physical address corresponding to the virtual address V1. The host operating system updates the PT, to be specific, adds a PTE to the PT, where the PTE records a correspondence between the physical address P1 and the virtual address V1. The host operating system stores an updated PT in the internal memory of the host, and notifies the MMU to continue processing. The MMU obtains the updated PT, searches for the PTE that records the virtual address V1, determines the physical address P1 corresponding to the virtual address V1, and sets a flag bit in the PTE to 1. The MMU writes the data to the physical address P1.

When a compute instance needs to read data from a virtual address V1, the compute instance sends an access request 2 to the MMU (from a perspective of hardware interaction, the access request 2 is sent by the processor to the MMU). The access request 2 is used to request to read the data in the virtual address V1, and the access request 2 further carries the virtual address V1 of a page. After receiving the access request 2, the MMU finds a PT corresponding to the compute instance, and determines, through searching, whether a physical address corresponding to the virtual address V1 exists in the PT. If the MMU finds, in the PT, a PTE that records the virtual address V1, the MMU reads the data from the physical address corresponding to the virtual address, feeds back the data to the compute instance, and sets a flag bit to 1. If the MMU does not find, in the PT, a PTE that records the virtual address V1, it indicates that the data is not stored in the internal memory of the host. In this case, there are two possible cases: Case 1: In a scenario in which a swap mechanism exists and a swap module is deployed in the host, the MMU may trigger a page fault procedure, and obtain the data in the virtual address V1 through the swap module. For a process in which the MMU obtains the data in the virtual address V1 through the swap module, refer to the following related descriptions of the swap mechanism. Details are not described herein. Case 2: When no swap mechanism exists in the host, the MMU triggers a page fault procedure, and sends, to the host operating system, an exception signal indicating a page fault, so that the host operating system continues processing.

(3). Swap (swap) mechanism, swap area (swap area), and swap module.

The swap mechanism indicates an internal memory swap. Two concepts, a physical internal memory and a virtual internal memory, are proposed in the swap mechanism. The physical internal memory is an actual internal memory of a host, and may also be referred to as an internal memory of the host in embodiments of this application. The virtual internal memory is a swap area, and is usually located in a local storage device of the host. The local storage device of the host is a storage device connected to the host through a system bus, for example, a hard disk of the host. In embodiments of this application, alternatively, the virtual internal memory may be located in a remote storage device. The remote storage device is a storage device connected to the host through a network, for example, a storage node in a remote storage system. Alternatively, the virtual internal memory may be deployed in a private cloud or a public cloud, in other words, may be located in a cloud data center. For example, the virtual internal memory is storage space pre-allocated to the host in the cloud data center, and the storage space is distributed on one or more devices. In other words, the virtual internal memory may be deployed in a cloud, and a device in which the virtual internal memory is located is located in the cloud. In the swap mechanism, partial storage space allowed to be opened up from a storage device of the host (the storage device herein includes the local storage device of the host, the remote storage device, and the device in the cloud), and the partial storage space is virtualized as internal memory space of the host, and is used as the virtual internal memory. When internal memory space of the host is insufficient, data is swapped between the physical internal memory and the virtual internal memory.

For ease of describing an implementation of the swap mechanism, an executor implementing the swap mechanism is referred to as a swap module herein. The swap module is essentially a software module running on the host, and is a part of a host operating system.

The implementation of the swap mechanism is as follows:
When free space in the physical internal memory of the host is small (for example, a size of the free internal memory space in the physical internal memory is lower than a preset threshold), or the swap module predicts that free internal memory space in the physical internal memory may be insufficient subsequently, the swap module may swap some pages in the physical internal memory to the virtual internal memory, and store data on these pages in the virtual internal memory, to release some memory space of the physical internal memory. This process is page swap out (swap out). These swapped out pages may be referred to as swap out pages. In this process, because the swap out pages are no longer stored in the physical internal memory, PTEs (PTEs that record correspondences between virtual addresses of the swap out pages and physical addresses of the swap out pages) related to the swap out pages in a PT are also deleted. The swap module needs to record correspondences between the virtual addresses of the swap out pages and addresses of the swap out pages in the virtual internal memory.

When the host needs to invoke these pages (for example, an MMU receives an access request 2 initiated by a process on the host, and virtual addresses carried in the access request are the virtual addresses of the swap out pages), or when the physical internal memory of the host has sufficient free space (for example, a size of free internal memory space in the physical internal memory is greater than a preset threshold), the swap module may swap the swap out pages from the virtual internal memory to the physical internal memory. This process is page swap in (swap in). These swapped in pages may be referred to as swap in pages. In this process, because the swap in pages are stored in the physical internal memory, the host operating system needs to allocate new physical addresses (the physical addresses are referred to as physical addresses of the swap in pages) to the swap in pages in the physical internal memory, and PTEs (PTEs that record correspondences between the virtual addresses of the swap in pages and the physical addresses of the swap in pages) related to the swap in pages are added to the PT used by the MMU. The swap module also deletes the previously recorded correspondences between the virtual addresses of the swap in pages and the addresses of the swap in pages in the virtual internal memory.

With reference to a working procedure of the MMU and the swap module, the following further describes a common processing procedure of an access request that is initiated for a compute instance and that is used to read a page A. Because the swap module is usually considered as a part of the host operating system, in description of the processing procedure, the swap module and the host operating system are no longer distinguished, and are collectively referred to as a host operating system.

The compute instance initiates the access request. The access request is used to request to read data on the page A, and the access request carries a virtual address V1 of the page A. The MMU obtains the access request, and obtains a PT corresponding to the compute instance from the internal memory. The MMU searches the PT for a PTE that records the virtual address V1.

If the MMU finds, in the PT, the PTE that records the virtual address V1, the MMU determines a physical address P1 corresponding to the virtual address V1, sends the physical address P1 to the internal memory, and feeds back, to the compute instance, the data that is in the physical address P1 and that is returned by the internal memory.

If the MMU does not find, in the PT, the PTE that records the virtual address V1, the MMU triggers a page fault procedure, and sends a page fault exception signal to the host operating system, and the host operating system suspends running of the compute instance. The host operating system searches for a correspondence, between the virtual address V1 and an address X1 of the data on the page A in the virtual internal memory, recorded when the page A is swapped out, swaps the data on the page A from the virtual internal memory to the internal memory of the host based on the address X1, and reallocates a segment of free internal memory space to the page A. A physical address P2 of the free internal memory space reallocated by the host operating system to the page is used as a physical address corresponding to the virtual address V1, and the PT is updated. To be specific, the host operating system adds a PTE to the PT, where the PTE records a correspondence between the physical address P2 and the virtual address V1. The host operating system stores an updated PT in the internal memory of the host, notifies the MMU to continue processing, and starts running of the compute instance. The MMU obtains the updated PT, searches for the PTE that records the virtual address V1, determines the physical address P2 corresponding to the virtual address V1, and sets a flag bit in the PTE to 1. The MMU sends the physical address P2 to the internal memory of the host, and feeds back, to the compute instance, the data fed back from the internal memory of the host.

In a scenario in which a virtualization technology is applied and a compute instance is deployed in a host, a compute instance can occupy internal memory space of the host (occupy some pages in an internal memory), but a host operating system cannot sense a use status of the compute instance (especially a virtual machine) for the occupied internal memory space.

During page swap out, the host operating system determines which page or pages in the internal memory is or are to be swapped out. In a common manner, the host operating system determines, by using a least recently used (least recently used, LRU) algorithm, one or more pages least recently used in pages in the internal memory, and swaps the determined one or more pages to a virtual internal memory.

However, in this manner, because the host operating system cannot obtain use statuses of the compute instance (for example, the virtual machine) for the pages occupied by the compute instance, for example, the host operating system cannot learn whether the pages occupied by the compute instance are pages occupied by a kernel of the compute instance or pages occupied by an application in the compute instance, the host operating system cannot learn of access frequency of the compute instance for the occupied pages. Consequently, the host operating system swaps some important pages of the compute instance to the virtual internal memory as swap out pages. When the compute instance needs to invoke these pages, an MMU triggers a page fault procedure. The page fault procedure is accompanied by a page swap in operation. This increases a latency, causes the compute instance to freeze, and affects working efficiency of the compute instance.

Therefore, embodiments of this application provide a page swap out method. In the method, a compute instance may send page labels to a host operating system. The page labels indicate importance degrees of pages occupied by the compute instance in an internal memory of a host. When the host operating system needs to swap a page in the internal memory to a storage device that is outside the internal memory and in which a swap area is deployed, the host operating system determines, based on the page labels, a target page that is in the internal memory of the host and that needs to be swapped out, and swaps the determined target page to the storage device. In embodiments of this application, because the compute instance can notify the host operating system of the importance degrees of the occupied pages, the host operating system can avoid swapping, to the storage device, a page that has a high importance degree and that is occupied by the compute instance. When the compute instance needs to invoke the page that has the high importance degree, an MMU does not trigger a page fault procedure, and running of the compute instance is not suspended.

In addition, to reduce pressure of the host operating system, when the host operating system swaps the page to the storage device, the host operating system sends a swap out instruction to an acceleration apparatus of the host. The swap out instruction instructs the acceleration apparatus to swap the page to the storage device, and the swap out instruction carries a virtual address of the page and the page. The acceleration apparatus obtains the page, stores the page in the storage device, and records a correspondence between the virtual address of the page and an address of the page in the storage device. In other words, the acceleration apparatus may swap the page from the internal memory of the host to the storage device in place of the host operating system (a processor), so that processor occupation can be reduced, thereby releasing compute power of the processor.

After the page in the internal memory is swapped to the storage device, the page in the storage device may need to be swapped to the internal memory of the host. Embodiments of this application provide a page swap in method. In embodiments of this application, the acceleration apparatus of the host may swap the page from the storage device to the internal memory of the host in place of the processor (which may be understood as the host operating system) in the host. The MMU in the host sends a swap in instruction to the acceleration apparatus. The swap in instruction instructs to swap the page to the internal memory. The swap in instruction may carry the virtual address of the page. After receiving the swap in instruction, the acceleration apparatus may swap the page from the storage device to the internal memory of the host according to the swap in instruction, and notify the MMU that the page has been swapped to the internal memory of the host. For example, the acceleration apparatus may determine the address of the page in the storage device based on the recorded correspondence, obtain the page from the storage device based on the address of the page in the storage device, and write the page to the internal memory of the host. In this way, processor occupation can be further reduced.

In embodiments of this application, swapping the page to the storage device outside the internal memory is swapping the page to a swap area, and the storage device is a storage device in which the swap area is deployed. In other words, the two expressions, swapping the page to the storage device outside the internal memory and swapping the page to the swap area, are essentially the same. In the following, the two expressions are unified as swapping the page to the swap area. However, it should be understood that, swapping the page to the swap area is swapping the page to the storage device and storing the page in the storage device. Similarly, swapping the page from the storage device to the internal memory of the host is swapping the page in the swap area to the internal memory of the host. The two expressions, swapping the page from the storage device to the internal memory of the host and swapping the page from the swap area to the internal memory of the host are essentially the same. In the following, the two expressions are unified as swapping the page from the swap area to the internal memory of the host. In other words, for clearer expression, in the following page swap in and swap out processes, a swap area indicates a storage device in which the swap area is located.

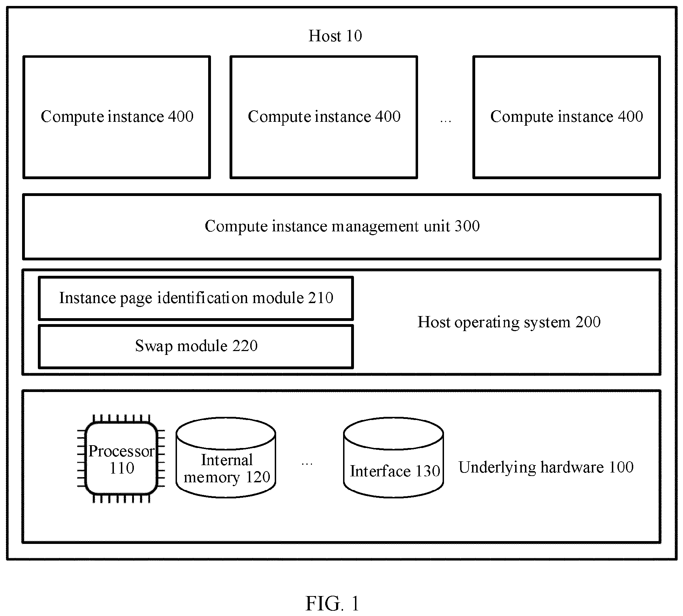

FIG. 1 is a diagram of a virtualization architecture of a host according to an embodiment of this application. A virtualization technology is applied to a host 10, to form the virtualization architecture shown in FIG. 1. The virtualization architecture of the host 10 includes underlying hardware 100, a host operating system 200, a compute instance management unit 300, and at least one compute instance 400. The host 10 is a computing device. The host 10 may be a server, a mobile terminal, a tablet computer, or other computing devices.

The underlying hardware 100 is some hardware components in the host 10, such as a processor 110, an internal memory 120, and an input/output (input/output, I/O) interface 130. The underlying hardware 100 may be understood as physical resources on the host 10, and is an object that needs to be virtualized in the virtualization technology.

Based on the underlying hardware 100, the host 10 runs the host operating system 200, the compute instance management unit 300, the compute instance 400, and other software modules.

The host operating system 200 runs on the processor 110, and is configured to implement a basic function of the host 10. The basic function includes but is not limited to a management function for the underlying hardware 100, a control function for an input/output device (such as a display, a keyboard, or a mouse) connected to the host 10, and management of a process in the host 10. This embodiment of this application mainly relates to the management function for the underlying hardware 100. For example, the host operating system 200 manages the internal memory 120 of the host 10. The host operating system 200 can monitor an occupation status of the internal memory 120, and allocate internal memory space. The host operating system 200 can further detect access frequency of a page in the internal memory 120. The host operating system 200 can implement a page swap between the internal memory 120 of the host 10 and a swap area 160.

In this embodiment of this application, the host operating system 200 can obtain page labels of the compute instance 400 from the compute instance 400. The page labels indicate importance degrees of pages occupied by the compute instance 400 in the internal memory 120 of the host 10. The host operating system 200 can further obtain page access frequency of the pages occupied by the compute instance 400. When the host operating system 200 needs to swap a page in the internal memory 120 of the host 10 to the swap area 160, the host operating system 200 may determine a target page from the internal pages of the host 10 based on some or all of the page labels, the page access frequency, and a page swap parameter configured by a user. The host operating system 200 swaps the determined target page to the swap area 160. The host operating system 200 may also swap, to the internal memory 120 of the host 10, the page swapped to the swap area 160.

In terms of a logical function, the host operating system 200 includes an instance page identification module 210 and a swap module 220.

The instance page identification module 210 can obtain the page labels from the compute instance 400, and can further obtain, based on an access status of the MMU for a PT corresponding to the compute instance 400, the page access frequency of the pages occupied by the compute instance 400.

The instance page identification module 210 can further provide a parameter configuration interface for the user, to allow the user to configure the page swap parameter. The page swap parameter indicates a selection condition of the target page. The page swap parameter includes but is not limited to an identifier of a compute instance 400 that allows page swap out, page scanning frequency, a cold page determining threshold, and maximum internal memory space allowed to be occupied by the compute instance 400.

When a page needs to be swapped from the internal memory 120 of the host 10 to the swap area 160, the instance page identification module 210 selects, based on some or all of the page labels of the compute instance 400, the page access frequency, and the page swap parameter, the target page from the pages occupied by the compute instance 400. The target page is a page that is in the pages occupied by the compute instance 400 and that is allowed to be swapped out. The instance page identification module 210 sends a virtual address of the target page to the swap module 220.

The swap module 220 is configured to implement a page swap between the internal memory 120 of the host 10 and the swap area 160. To be specific, the swap module 220 can swap a page in the internal memory 120 of the host 10 to the swap area 160 and swap a page in the swap area 160 to the internal memory 120 of the host 10.

When the swap module 220 needs to swap a page in the internal memory 120 of the host 10 to the swap area 160, the swap module 220 swaps the target page to the swap area 160. The swap module 220 may further update the PT corresponding to the compute instance 400, to delete a PTE related to the target page from the PT.

When swapping the target page to the swap area 160, the swap module 220 may send the target page to the swap area 160, in other words, the swap module 220 self-completes swap out of the target page. Alternatively, the swap module 220 may instruct an acceleration apparatus 150 of the host 10 to perform swap out of the target page. For example, the swap module 220 sends a swap out instruction to the acceleration apparatus 150 of the host 10, to notify the acceleration apparatus 150 to swap the target page to the swap area 160. The swap out instruction carries the virtual address of the target page.

When the swap module 220 needs to swap the target page in the swap area 160 to the internal memory 120 of the host 10, the swap module 220 may directly obtain the target page from the swap area 160, and swap the obtained target page to the internal memory 120 of the host 10. Alternatively, the swap module 220 may instruct the acceleration apparatus 150 of the host 10 to perform page swap in. For example, the swap module 220 sends a swap in instruction to the acceleration apparatus 150 of the host 10, to notify the acceleration apparatus 150 to swap the target page to the internal memory 120 of the host 10. The swap in instruction carries the virtual address of the target page.

In this embodiment of this application, module division is an example, and is merely logical function division. During actual implementation, there may be another division manner. Functional modules in this embodiment of this application may be integrated into one processing module, each of the modules may exist alone physically, or two or more modules may be integrated into one module. The integrated module may be implemented in a form of hardware, or may be implemented in a form of a software functional module.

The compute instance management unit 300 is configured to manage the compute instance 400. The compute instance management unit 300 can virtualize the underlying hardware 100, to provide a running environment for the compute instance 400. The compute instance management unit 300 provides the running environment for the compute instance 400 in a plurality of manners. For example, the compute instance management unit 300 can emulate a running environment for the compute instance 400 in a software manner. For another example, the compute instance 400 may pass through the underlying hardware 100 (for example, the internal memory 120) to the compute instance 400.

When the compute instance 400 is a virtual machine, the compute instance management unit 300 includes a QEMU (quick emulator) and a virtual machine manager (virtual machine monitor, VMM). When the compute instance 400 is a container, the compute instance management unit 300 may be a container engine (container engine).

In this embodiment of this application, the compute instance management unit 300 may transmit the page labels of the compute instance 400 to the host operating system 200.

In some possible scenarios, the compute instance management unit 300 may be built in the host operating system 200. In this scenario, the host operating system 200 has a function of the compute instance management unit 300. To be specific, the host operating system 200 may directly obtain the page labels of the compute instance 400 from the compute instance 400.

The compute instance 400 has an independent running environment. The compute instance 400 occupies the physical resources of the host 10, and can execute various tasks based on the occupied physical resources, to implement a related service. Compute instances 400 are independent of each other and do not affect each other. In this embodiment of this application, the compute instance 400 may be a virtual machine, may be a container, or may be another module formed through virtualization of the physical resources of the host 10.

In this embodiment of this application, the compute instance 400 can evaluate the importance degrees of the pages occupied by the compute instance 400 in the internal memory 120 of the host 10, and generate the page labels of the compute instance 400. The compute instance 400 may further send page information of the compute instance 400 to the host operating system 200.

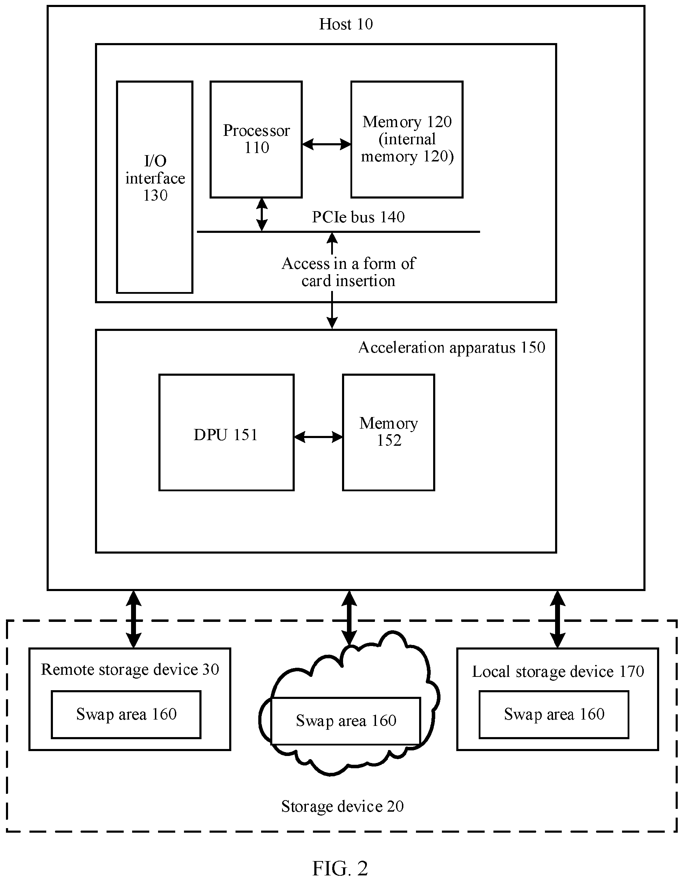

The following describes hardware components included in the host 10. FIG. 2 is a diagram of a structure of a host 10 according to an embodiment of this application. The host 10 includes an I/O interface 130, a processor 110, a memory 120, and an acceleration apparatus 150. The I/O interface 130, the processor 110, the memory 120, and the acceleration apparatus 150 may be connected to each other through a system bus. The system bus may be a peripheral component interconnect express (peripheral component interconnect express, PCIe) bus, or may be a bus of a compute express link (compute express link, CXL), a universal serial bus (universal serial bus, USB) protocol, or another protocol.

FIG. 2 shows an example of a connection manner. In FIG. 2, the acceleration apparatus 150 may be directly inserted into a card slot on a mainboard of the host 10, and swap data with the processor 110 through a PCIe bus 140.

The I/O interface 130 is configured to communicate with a device located outside the host 10. For example, data sent by the device outside the host 10 is received through the I/O interface 130, or data is sent to the device outside the host 10 through the I/O interface 130.

The processor 110 is an operation core and a control core of the host 10, and may be a central processing unit (central processing unit, CPU), or may be another specific integrated circuit. Alternatively, the processor 110 may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like.

The memory 120 is usually configured to store computer program instructions related to a host operating system 200, computer program instructions related to a compute instance management unit 300 and a compute instance 400, and data generated by the host operating system 200, the compute instance management unit 300, and the compute instance 400 in a running process. The memory 120 has an advantage of a high access speed. The memory 120 is usually a dynamic random access memory (dynamic random access memory, DRAM). In addition to the DRAM, the memory 120 may alternatively be another random access memory, for example, a static random access memory (Static random access memory, SRAM) or a storage class memory (storage class memory, SCM). In addition, the memory 120 may alternatively be a read-only memory (read-only memory, ROM). For example, the read-only memory may be a programmable read-only memory (programmable read-only memory, PROM) or an erasable programmable read-only memory (erasable programmable read-only memory, EPROM). The memory 120 may alternatively be a dual in-line memory module (dual in-line memory module, DIMM), a flash memory medium (FLASH), a hard disk drive (hard disk drive, HDD), a solid state disk (solid state disk, SSD), or the like.

The processor 110 is connected to the memory 120 through a double data rate (double data rate, DDR) bus or another type of bus. The memory 120 is understood as an internal memory (internal memory) 120 of the host 10, and the internal memory 120 is also referred to as a main memory (main memory).

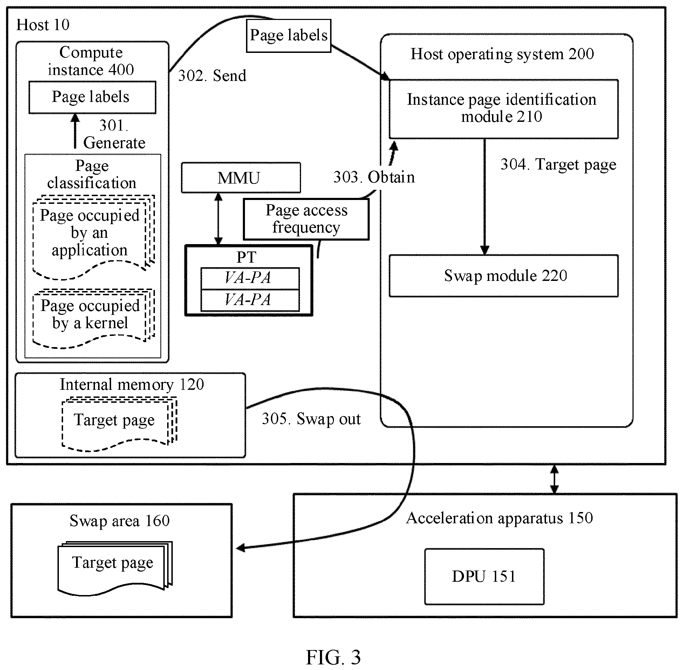

The processor 110 may invoke computer program instructions in the internal memory 120 to form the host operating system 200, the compute instance management unit 300, the compute instance 400, and other software modules in the host 10. As the operation core and the control core of the host 10, the processor 110 can support steps performed by a host operating system 200 and a compute instance 400 in an embodiment shown in FIG. 3

The acceleration apparatus 150 is connected to the host 10, and the acceleration apparatus 150 may be used as an external device of the host 10. Alternatively, the acceleration apparatus 150 may be deployed inside the host 10. For example, the acceleration apparatus 150 is located on the mainboard or a backplane of the host 10. FIG. 2 is a diagram in which the acceleration apparatus 150 is deployed inside the host 10.

The acceleration apparatus 150 may be used as a module that has a data processing function and that is attached to the host 10, and undertake some functions of the host 10. In other words, some functions of the host 10 are offloaded to the acceleration apparatus 150, and the acceleration apparatus 150 processes data and executes some tasks in place of the host 10 (for example, the processor 110 in the host 10), to reduce pressure of the processor 110 in the host 10, and release compute power of the processor 110. In this embodiment of this application, the acceleration apparatus 150 can implement data access to a swap area 160. The data access herein includes swapping a page from the internal memory 120 of the host 10 to the swap area 160, and swapping a page from the swap area 160 to the internal memory 120 of the host 10.

For example, the acceleration apparatus 150 may receive a swap out instruction sent by the host operating system 200. The swap out instruction carries a virtual address of a page and the page (the page may be a target page in the embodiment shown in FIG. 3). Optionally, the swap out instruction further includes an identifier of a process (the process may be a compute instance 400). After receiving the swap out instruction, the acceleration apparatus 150 sends the page to a storage device in which the swap area 160 is located, to store the page in the swap area 160; and stores a correspondence between the virtual address of the page (optionally, further includes the identifier of the process) and an address of the page in the swap area 160.

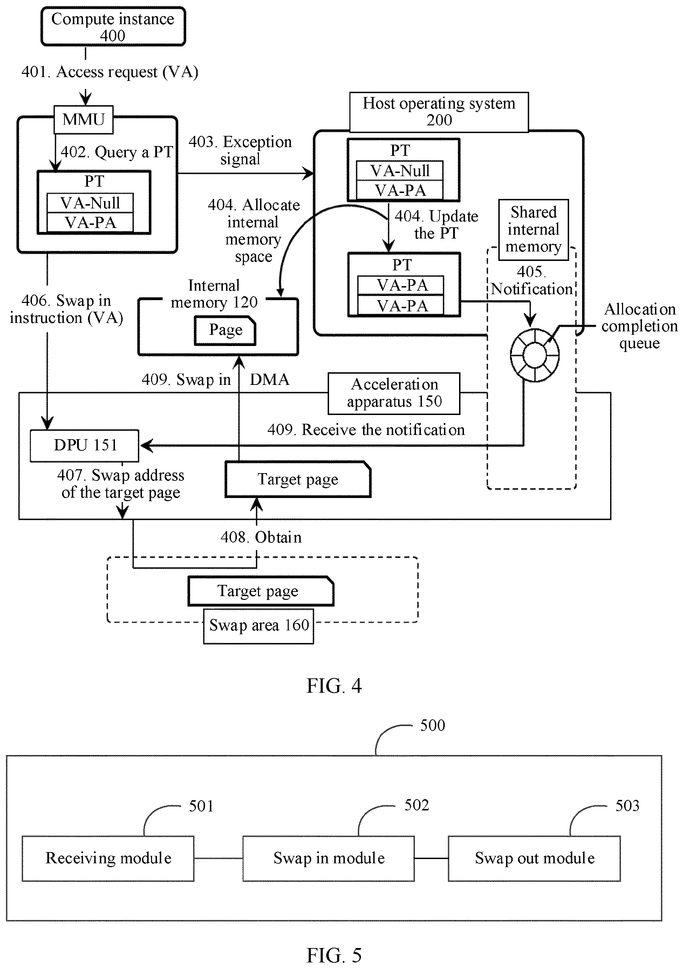

For another example, the acceleration apparatus 150 may receive a swap in instruction sent by an MMU. The swap in instruction instructs to swap a page (the page may be a target page in an embodiment shown in FIG. 4) to the internal memory 120 of the host 10. The acceleration apparatus 150 swaps the page from the swap area 160 to the internal memory 120 of the host 10 according to the swap in instruction.

The swap in instruction received by the acceleration apparatus 150 carries a virtual address of the page. Optionally, the swap out instruction further includes an identifier of a process (the process may be a compute instance 400). After receiving the swap in/out instruction, the acceleration apparatus 150 determines an address of the page in the swap area 160 based on the virtual address of the page, obtains the page from the swap area 160 based on the address of the page in the swap area 160, and writes the page to the internal memory 120.

In addition, the acceleration apparatus 150 further has data decompression and data compression functions. For example, the acceleration apparatus 150 may first compress a page (data on the page) that needs to be swapped to the swap area 160, and swap a compressed page to the swap area 160. For another example, the acceleration apparatus 150 may decompress a compressed page obtained from the swap area 160, and swap a page to the internal memory 120 of the host 10.

In this embodiment of this application, the swap area 160 is located in a storage device 20 outside the internal memory 120. The storage device 20 may be a remote storage device 30 located outside the host 10. Alternatively, the storage device 20 may be a local storage device 170 of the host 10. Alternatively, the storage device 20 may be located in a cloud, for example, located in a public cloud or a private cloud. The swap area 160 is storage space pre-allocated by the cloud to the host 10.

The "remote storage device 30" is a storage device that is connected to the host 10 through a network and that is located outside the host 10. The remote storage device 30 can store data. A type of the remote storage device 30 is not limited in this embodiment of this application. A storage medium of the remote storage device 30 may be a volatile memory (volatile memory), for example, a RAM, a DRAM, an SCM, or an SRAM. Alternatively, a storage medium of the remote storage device 30 may be a nonvolatile memory (nonvolatile memory), for example, a ROM, a flash memory, an HDD, an SSD, or an SCM.

The "local storage device 170" is a storage device for persistent storage in the host 10. The local storage device 170 is connected to the host 10 through a system bus. The local storage device 170 may be a nonvolatile memory, for example, a ROM, a flash memory, an HDD, or an SSD.

The "storage device located in a cloud" means that the storage device 20 is deployed in a cloud data center. The storage device 20 may be understood as storage space allocated by the cloud to the host. The storage device 20 may be one device in the cloud data center, to be specific, the device can provide storage space as the swap area 160. Alternatively, the storage device 20 may be a plurality of devices in the cloud data center, to be specific, the plurality of devices jointly provide storage space as the swap area 160.

An access manner of the acceleration apparatus 150 for the swap area 160 is not limited in this embodiment of this application. For example, when the swap area 160 is located in the remote storage device 30 and a storage medium of the remote storage device 30 is a volatile memory, for example, a DRAM or an SCM, the acceleration apparatus 150 may access the remote storage device 30 in a remote direct memory 120 access (remote direct memory access, RDMA) manner. For another example, when the swap area 160 is located in the remote storage device 30 and a storage medium of the remote storage device 30 is a nonvolatile memory, for example, an HDD or an SSD, or when the swap area 160 is located in the local storage device 170, the acceleration apparatus 150 may access the swap area 160 based on a network protocol, for example, an internet small computer systems interface (internet small computer systems interface, iSCSI), a fibre channel (fibre channel, FC), or a fibre channel over ethernet (fibre channel over ethernet, FCoE).

The acceleration apparatus 150 may provide a key value pair (key value, KV) interface for the processor 110 or the MMU in the host 10. The KV interface allows data to be swapped between the acceleration apparatus 150 and the processor 110 or between the acceleration apparatus 150 and the MMU by using a KV data structure. A key (key, K) in the key value pair may be a virtual address of a page, or a combination of the virtual address of the page and an identifier of a process. A value (value, V) in the key value pair may be the page.

For example, the swap in instruction sent by the MMU to the acceleration apparatus 150 may be represented in a KV form. When the acceleration apparatus 150 receives, on the KV interface, data including that the virtual address of the page (or a combination of the virtual address of the page and the identifier of the process) is a key and the page is a value, the acceleration apparatus 150 may consider that the page needs to be swapped to the swap area 160.

The swap out instruction sent by the processor 110 (which may also be understood as the host operating system 200) of the host 10 to the acceleration apparatus 150 may also be represented in a KV form. When the acceleration apparatus 150 receives, on the KV interface, data including that the virtual address of the page (or a combination of the virtual address of the page and the identifier of the process) is a key and a value is blank or invalid, the acceleration apparatus 150 may consider that the page needs to be swapped from the swap area 160 to the internal memory 120 of the host 10.

The acceleration apparatus 150 includes a processor. The processor may be a processor that has a data processing function, such as a data processing unit (data processing unit, DPU) 151, a graphics processing unit (graphics processing unit, GPU), a tensor processing unit (tensor processing unit, TPU), or a neural network processing unit (neural network processing unit, NPU). In FIG. 2, only an example in which the processor included in the acceleration apparatus 150 is the DPU 151 is used for description. Optionally, the acceleration apparatus 150 further includes a memory 152, a power supply circuit, and the like. The DPU 151 is connected to the memory 152 through a system bus. The system bus may be a PCIe-based line, or may be a bus of a CXL, a USB protocol, or another protocol.

The DPU 151 is a main operation unit of the acceleration apparatus 150, and is a core unit of the acceleration apparatus 150. The DPU 151 undertakes a main function of the acceleration apparatus 150. In this embodiment of this application, the DPU 151 can perform data access on the swap area 160, and can further perform data compression and decompression.

The following describes, with reference to FIG. 3 and FIG. 4, a page swap out method and a page swap in method provided in embodiments of this application. FIG. 3 shows a page swap out method according to an embodiment of this application. FIG. 4 shows a page swap in method according to an embodiment of this application.

It should be noted that the page swap out method shown in FIG. 3 and the page swap in method in FIG. 4 exist independently. The page swap out method shown in FIG. 3 and the page swap in method in FIG. 4 may be used in combination. To be specific, when a page in an internal memory 120 of a host 10 needs to be swapped to a swap area 160 (the page in the internal memory 120 of the host 10 needs to be swapped to a storage device 20), the page swap out method shown in FIG. 3 may be used. If the page in the swap area 160 needs to be subsequently swapped to the internal memory 120 of the host 10 (the page in the storage device 20 needs to be swapped to the internal memory 120 of the host 10), the page swap in method shown in FIG. 4 may be used. Alternatively, the page swap out method shown in FIG. 3 and the page swap in method in FIG. 4 may be used independently. To be specific, when the page swap out method shown in FIG. 3 is used to perform page swap out, another manner may be used to perform page swap in. For another page swap in manner, refer to the foregoing descriptions of the swap mechanism. Before the page swap in method shown in FIG. 4 is used to perform page swap in, another manner may be used to perform page swap out. For another page swap out manner, refer to the foregoing descriptions of the swap mechanism.

FIG. 3 shows a page swap out method according to an embodiment of this application. The method includes the following steps.

Step 301. A compute instance 400 classifies pages occupied by the compute instance 400 in an internal memory 120 of a host 10, and generate page labels of the compute instance 400. The page labels of the compute instance 400 indicate importance degrees of the pages occupied by the compute instance 400 in the internal memory 120 of the host 10.

The compute instance 400 may classify, based on the importance degrees of the pages, the pages occupied by the compute instance 400. The compute instance 400 may classify, from a perspective of objects that occupy the pages, the pages occupied by the compute instance 400. For example, the compute instance 400 may classify, as one category, pages occupied by an operating system (for example, a guestOS) of the compute instance 400, and consider that the pages of this type have high importance degrees; and the compute instance 400 may classify, as one category, pages occupied by an application on the compute instance 400, and consider that the pages of this type have low importance degrees. The compute instance 400 may classify, based on invoking frequency (which may also be referred to as access frequency) of the pages, the pages occupied by the compute instance 400. The compute instance 400 may classify, as one category, pages frequently invoked by the compute instance 400 (for example, pages whose invoking frequency is greater than a first frequency threshold), and consider that the pages of this type have high importance degrees; and the compute instance 400 may classify, as one category, pages not frequently invoked by the compute instance 400 (for example, pages whose invoking frequency is less than the first frequency threshold), and consider that the pages of this type have low importance degrees.

A classification manner of the compute instance 400 for the pages occupied by the compute instance 400 and an evaluation criterion of the importance degrees of the pages are not limited in this embodiment of this application.

After classifying the pages occupied by the compute instance 400 in the internal memory 120 of the host 10, the compute instance 400 may set an importance degree value for pages of each type based on the importance degrees of the pages of various types, and the page labels of the compute instance 400 include importance degree values of the pages. Optionally, the page labels of the compute instance 400 further include virtual addresses of the pages (or combinations of the virtual addresses of the pages and an identifier of the compute instance 400).

Alternatively, after classifying the pages occupied by the compute instance 400 in the internal memory 120 of the host 10, the compute instance 400 may directly use, as the importance degrees of the pages, categories to which the pages belong, and the page labels of the compute instance 400 include the categories to which the pages belong. Optionally, the page labels of the compute instance 400 further include virtual addresses of the pages (or combinations of the virtual addresses of the pages and an identifier of the compute instance 400).

For example, from a perspective of objects that occupy the pages, when the compute instance 400 is a virtual machine, categories of the pages occupied by the virtual machine may include a page occupied by an operating system (for example, a guestOS) of the virtual machine, a page occupied by an application (application, APP) on the virtual machine, and a virtual machine management page. A category of the page occupied by the operating system (for example, the guestOS) of the compute instance 400 may be identified as a kernel (kernel), and a category of the page occupied by the application on the virtual machine may be identified as an APP.

The page occupied by the operating system (for example, the guestOS) of the virtual machine is a page that stores data or computer program instructions related to the operating system of the virtual machine. The virtual machine management page is a page that stores virtual machine management data (such as attribute information of the virtual machine and an identifier of the virtual machine). The page occupied by the application on the virtual machine is a page that stores data or computer program instructions related to the application.

Similarly, when the compute instance 400 is a container, categories of the pages occupied by the container may include a page occupied by an application on the container and a container management page.

A page occupied by an operating system (for example, a guestOS) of the container is a page that stores data or computer program instructions related to the operating system of the container. The container management page is a page that stores container management data (such as attribute information of the container and an identifier of the container). The page occupied by the application on the container is a page that stores data or computer program instructions related to the application.

For another example, based on access statuses of the pages, categories of the pages occupied by the compute instance may include a cold page and a hot page. The cold page is a page with a low page access degree (for example, a page whose page access frequency is lower than a value), and the hot page is a page with a high page access degree (for example, a page whose page access frequency is greater than a value).

Step 302. The compute instance 400 sends the page labels of the compute instance 400 to a host operating system 200. In the host operating system 200, an instance page identification module 210 may receive the page labels.

The compute instance 400 may directly transfer the page labels to the host operating system 200, or may transfer the page labels to the host operating system 200 through a compute instance management unit 300.

It should be noted that the virtual addresses of the pages in the page labels received by the host operating system 200 should be virtual addresses that can be identified by the host operating system 200.

For example, when the compute instance 400 is a virtual machine, when the compute instance 400 accesses the pages, used virtual addresses of the pages may be guest virtual addresses (guest virtual address, GVA) configured by a guestOS for the pages. APT that corresponds to the compute instance 400 and that is obtained by an MMU includes two page tables. One page table is a guest page table (guest page table, GPT), and records correspondences between the guest virtual addresses and guest physical addresses (guest physical address, GPA). The other page table is an extended page table (extended page table, EPT), and records correspondences between the guest physical addresses and host 10 physical addresses (host physical address, HPA). The MMU may query the GPT and the EPT based on the GPAs, to determine the HPAs. The virtual addresses that are of the pages and that can be identified by the host operating system 200 are host virtual addresses (host virtual address, HVA). The compute instance management unit 300 can translate the GPAs into the HVAs. Virtual addresses that are of the pages and that are carried in page labels initially generated by the compute instance 400 may be the GPAs (the compute instance 400 internally stores the GPT, and when internally generating the page labels, the compute instance 400 may self-translate the GVAs of the pages into the GPAs). When the compute instance 400 transmits the page labels through the compute instance management unit 300, the compute instance management unit 300 may translate the GPAs in the page labels into the HVAs to update the page labels, and send updated page labels to the host operating system 200. In this way, the virtual addresses of the pages in the page labels received by the host operating system 200 are the HVAs that can be identified by the host operating system 200.

In this embodiment of this application, the compute instance 400 may perform periodic or real-time evaluation to classify the pages occupied by the compute instance 400, to determine the importance degrees of the pages occupied by the compute instance 400, and then generate the page labels. The compute instance 400 may periodically send the page labels to the host operating system 200. Alternatively, when the page labels change (or the importance degrees of the pages occupied by the compute instance 400 change), the compute instance 400 may send, to the host operating system 200, changed page labels or page labels generated after the importance degrees change.

Step 303. The host operating system 200 obtains the page access frequency of the pages occupied by the compute instance 400. This step may be performed by the instance page identification module 210.

It can be learned from the foregoing descriptions of the MMU that, each time the MMU finds a PTE in a PT, the MMU sets a flag bit in the PTE to 1. If the PTE is not accessed in a subsequent period of time, the flag bit is recovered to 0.

The host operating system 200 may periodically scan flag bits of PTEs in the PT corresponding to the compute instance 400, to determine the page access frequency of the pages. For any PTE in the PT corresponding to the compute instance 400, the host operating system 200 checks a flag bit of the PTE when a monitoring time point arrives. If the host operating system 200 finds that the flag bit of the PTE is 1, the host operating system 200 records a quantity of access times of a page corresponding to the PTE plus 1, and sets the flag bit to 0. If the host operating system 200 finds that the flag bit of the PTE is 0, the host operating system 200 considers that a page corresponding to the PTE is not accessed, and a quantity of access times of the page corresponding to the PTE remains unchanged. The foregoing operation is repeated in a period of time, so that the host operating system 200 can obtain a quantity of access times of the page corresponding to the PTE in the period of time, and then determine page access frequency of the page.

Step 304. When the host operating system 200 needs to swap a page to a swap area 160, the host operating system 200 selects a target page from the pages occupied by the compute instance 400. The target page is a page that is in the pages occupied by the compute instance 400 and that is allowed to be swapped out. This step may be performed by the instance page identification module 210.

The host operating system 200 needs to swap a page to the swap area 160 in a plurality of cases. A specific scenario in which the host operating system 200 needs to swap a page to the swap area 160 is not limited in this embodiment of this application. For example, when the host operating system 200 receives an exception signal that is sent by the MMU and that indicates a page fault, if the host operating system 200 determines that the internal memory 120 of the host 10 has no free internal memory space or free internal memory space in the internal memory 120 of the host 10 is less than a preset free threshold, the host operating system 200 may determine that a page in the internal memory 120 of the host 10 needs to be swapped to the swap area 160. For another example, the host operating system 200 may predict that internal memory space of the host 10 may be insufficient in the future. For example, the host operating system 200 detects that a new compute instance 400 needs to be created. For another example, a version update needs to be performed on the guestOS in the compute instance 400. The host operating system 200 may determine that a page in the internal memory 120 of the host 10 needs to be swapped to the swap area 160.

The host operating system 200 can further provide a parameter configuration interface for a user, to allow the user to configure a page swap parameter. The page swap parameter indicates a selection condition of the target page. The page swap parameter includes but is not limited to an identifier of a compute instance 400 that allows page swap out, page scanning frequency, a cold page determining threshold, and maximum internal memory space allowed to be occupied by the compute instance 400.

Because swap in/swap out of a page occupied by a compute instance 400 always affects working efficiency of the compute instance 400 in some cases, not all compute instances 400 allow occupied pages to be swapped out, and there are always some compute instances 400 that do not allow page swap out, for example, some compute instances 400 that undertake important services in the host 10, or compute instances 400 leased by important users in the host 10. The user configures, on the parameter configuration interface provided by the host operating system 200 for the user, the identifier of the compute instance 400 that allows page swap out or an identifier of a compute instance 400 that does not allow page swap out. If the user does not configure the identifier of the compute instance 400 that allows page swap out, or the host operating system 200 provides, for the user, no interface for configuring the identifier of the compute instance 400 that allows page swap out, the host operating system 200 may consider that all compute instances 400 of the host 10 allow page swap out.

In step 303, the host operating system 200 can periodically scan the flag bits of the PTEs in the PT corresponding to the compute instance 400, and frequency of scanning the PTEs in the PT corresponding to the compute instance 400 is the page scanning frequency. If page scanning frequency is excessively large, the host operating system 200 needs to frequently scan the PT corresponding to the compute instance 400, and consequently load of the host operating system 200 is increased. However, if scanning frequency is excessively small, the host operating system 200 cannot accurately monitor a quantity of times a flag bit of a PTE is set to 1, and consequently accuracy of finally obtained page access frequency is poor. The host operating system 200 allows the user to configure the page scanning frequency based on experience or a requirement of the user. If the user does not configure the page scanning frequency or the host operating system 200 provides, for the user, no interface for configuring the page scanning frequency, the host operating system 200 may scan, at preset page scanning frequency, the flag bits of the PTEs in the PT corresponding to the compute instance 400.

A page whose page access frequency is less than a threshold is usually referred to as a cold page, and the threshold is the cold page determining threshold. The cold page has low access frequency, and can be usually swapped to the swap area 160 as a page that needs to be swapped out. The host operating system 200 may determine, based on a default threshold, whether a page is a cold page, or may provide, for the user, an interface for configuring the threshold, so that the user configures the threshold.

Because the compute instance 400 occupies some internal memory 120 space in the internal memory 120 of the host 10, if the internal memory 120 space occupied by the compute instance 400 is large, running of another compute instance 400 or the host operating system 200 is affected. If the internal memory 120 space occupied by the compute instance 400 is small, working efficiency of the compute instance 400 is affected. The host operating system 200 may preset the maximum internal memory 120 space allowed to be occupied by the compute instance 400, and internal memory 120 space allocated by the host operating system 200 to the compute instance 400 is not allowed to exceed the maximum internal memory 120 space. Certainly, alternatively, the user may configure the maximum internal memory space allowed to be occupied by the compute instance 400. An interface for configuring the maximum internal memory space allowed to be occupied by the compute instance 400 is provided for the user. After the user configures the maximum internal memory 120 space allowed to be occupied by the compute instance 400, internal memory 120 space allocated by the host operating system 200 to the compute instance 400 is not allowed to exceed the maximum internal memory 120 space configured by the user.

It should be understood that an occasion on which the user configures the page swap parameter should be earlier than step 304. For example, the host operating system 200 may display a configuration interface of the page swap parameter to the user when the compute instance 400 is created or in a running process of the compute instance 400, so that the user can complete configuration of the page swap parameter on the configuration interface of the page swap parameter.

The host operating system 200 can obtain three types of information of the compute instance 400: the page labels, the page access frequency, and the page swap parameter. The host operating system 200 can sort, based on one or more of the three types of information, the pages occupied by the compute instance 400, and select the target page from the pages.

The host operating system 200 can sort, based on one or more of the three types of information, the pages occupied by the compute instance 400, and select the target page from the pages in a plurality of manners. This is not limited in this application.

For example, the host operating system 200 can sort, based on the importance degrees that are of the pages occupied by the compute instance 400 and that are indicated by the page labels, the pages occupied by the compute instance 400, and a page with a higher importance degree is ranked higher. The host operating system 200 uses, as target pages, N pages ranked lowest, where N is a preset positive integer. The several categories listed in step 301 are used as an example. The target page includes a page occupied by an application on the compute instance 400, or may include a cold page of the compute instance 400.

For another example, the host operating system 200 can sort, in access frequency descending order based on access frequency that is of the pages occupied by the compute instance 400 and that is indicated by the page access frequency, the pages occupied by the compute instance 400. The host operating system 200 uses, as target pages, M pages ranked lowest, where M is a preset positive integer.

For another example, the host operating system 200 can sort, based on the importance degrees that are of the pages occupied by the compute instance 400 and that are indicated by the page labels, the pages occupied by the compute instance 400, and a page with a higher importance degree is ranked higher. For pages with a same importance degree, the host operating system 200 can perform sorting in access frequency descending order based on access frequency of the pages with the importance degree in the page access frequency, and the host operating system 200 uses, as target pages, P pages ranked lowest, where P is a preset positive integer.

For another example, after sorting, based on the page labels and the page access frequency, the pages occupied by the compute instance 400, the host operating system 200 uses, as target pages based on the cold page determining threshold in the page swap parameter, Q cold pages ranked lowest, where Q is a preset positive integer.

For another example, after sorting, based on the page labels and the page access frequency, the pages occupied by the compute instance 400, the host operating system 200 uses, as target pages based on the maximum internal memory space that is allowed to be occupied by the compute instance 400 and that is in the page swap parameter, H pages ranked lowest, where H is a positive integer. A size of internal memory space of remaining pages, other than the H pages, in the pages occupied by the compute instance 400 is equal to a size of the maximum internal memory space allowed to be occupied by the compute instance 400; or a size of internal memory space of remaining pages, other than the H pages, in the pages occupied by the compute instance 400 is less than a size of the maximum internal memory 120 space allowed to be occupied by the compute instance 400, and a difference between the two sizes falls within a preset range.

In actual application, not all pages in the internal memory 120 of the host 10 are occupied by the compute instance 400, and the pages in the internal memory 120 of the host 10 further include a page occupied by the host operating system 200 and a page occupied by an application on the host 10. Alternatively, the host operating system 200 may select a page from pages, other than the pages occupied by the compute instance 400, in the internal memory 120 of the host 10 as a page that needs to be swapped out. In the following step 305, only an example in which a page occupied by the compute instance 400 is used as the target page is used for description. However, for the page that needs to be swapped out and that is selected by the host operating system 200 from the pages, other than the pages occupied by the compute instance 400, in the internal memory 120 of the host 10, the host operating system 200 may swap the page to the swap area 160 in a manner similar to that in step 305.

Step 305. The host operating system 200 (for example, a swap module 220 in the host operating system 200) swaps the target page from the internal memory 120 of the host 10 to the swap area 160. The host operating system 200 updates the PT corresponding to the compute instance 400, and deletes, from the PT corresponding to the compute instance 400, a PTE that records a virtual address of the target page.

When the host operating system 200 performs step 305, the host operating system 200 may directly send the target page in the internal memory 120 of the host 10 to the swap area 160. The host operating system 200 may send a first data request to a storage device 20 in which the swap area 160 is located. The first data request is used to request to store the target page in the storage device 20, and the first data request carries the target page and an address that is of the target page in the swap area 160 and that is set by the host operating system 200 (for ease of description, the address of the target page in the swap area 160 or an address of the target page in the storage device 20 is referred to as a swap address of the target page). The host operating system 200 may record a correspondence between the virtual address of the target page and the swap address of the target page.

It should be understood that, because virtual addresses used by different processes on the host 10 may be the same, to distinguish between different processes, the correspondence recorded by the host operating system 200 may be a correspondence between a combination of the virtual address of the target page and the identifier of the compute instance 400 and the swap address of the target page. Any correspondence between the virtual address of the target page and the swap address of the target page in the following has the specified meaning. However, for ease of description, the expression "the correspondence between the virtual address of the target page and the swap address of the target page" is still used. To be specific, the correspondence may be the correspondence between the virtual address of the target page and the swap address of the target page (for example, in a scenario in which virtual addresses used by different processes or compute instances 400 on the host 10 are completely different), or the correspondence may be the correspondence between the combination of the virtual address of the target page and the identifier of the compute instance 400 and the swap address of the target page (for example, in a scenario in which virtual addresses used by different processes or compute instances 400 on the host 10 may be the same).

The host operating system 200 may maintain a page swap table for swapped out pages. The page swap table includes a plurality of entries. Each entry corresponds to one page swapped to the swap area 160, and the entry records a correspondence between a virtual address of the page and a swap address of the page (the swap address of the page is an address of the page in the swap area 160). When the host operating system 200 swaps the target page to the swap area 160, the host operating system 200 adds an entry corresponding to the target page to the page swap table, to record the correspondence between the virtual address of the target page and the swap address of the target page.

After receiving the first data request, the storage device 20 allocates a storage location to the target page, stores the target page at the storage location, and records a correspondence between the swap address of the target page and the storage location.

Alternatively, when performing step 305, the host operating system 200 may swap the target page from the internal memory 120 of the host 10 to the swap area 160 through an acceleration apparatus 150 of the host 10. For example, the host operating system 200 sends a swap out instruction to the acceleration apparatus 150 of the host 10. The swap out instruction instructs the acceleration apparatus 150 to swap the target page to the swap area 160. The swap out instruction carries the virtual address of the target page and the target page. Optionally, the swap out instruction further carries the identifier of the compute instance 400.

After receiving the swap out instruction, the acceleration apparatus 150 sends a second data request to a storage device 20 in which the swap area 160 is located. The second data request is used to request to store the target page in the storage device 20, and the second data request carries the target page and a swap address that is of the target page and that is configured by the acceleration apparatus 150. The acceleration apparatus 150 records a correspondence between the virtual address of the target page and the swap address of the target page.

Similarly, the acceleration apparatus 150 may maintain a page swap table for swapped out pages. The page swap table includes a plurality of entries. Each entry corresponds to one page swapped to the swap area 160, and the entry records a correspondence between a virtual address of the page and a swap address of the page. When the acceleration apparatus 150 swaps the target page to the swap area 160, the acceleration apparatus 150 adds an entry corresponding to the target page to the page swap table, to record the correspondence between the virtual address of the target page and the swap address of the target page.

After receiving the second data request, the storage device 20 allocates a storage location to the target page, stores the target page at the storage location, and records a correspondence between the swap address of the target page and the storage location.

When the acceleration apparatus 150 swaps the page from the internal memory 120 of the host 10 to the swap area 160, the acceleration apparatus 150 may directly swap the target page to the swap area 160. Alternatively, the acceleration apparatus 150 may first compress the target page, and swap a compressed target page to the swap area 160.

At this point, a page swap out procedure ends. When the compute instance 400 needs to invoke the target page, a page swap in procedure is triggered. For details, refer to FIG. 4.

FIG. 4 shows a page swap in method according to an embodiment of this application. In FIG. 4, a scenario in which a compute instance 400 invokes a target page is used as an example for description. It should be noted that, in a scenario in which another process of a host 10 invokes a page swapped to a swap area 160, the embodiment shown in FIG. 4 is also applicable. The compute instance 400 is understood as the another process of the host 10, and the target page is understood as the page that is of the another process and that is swapped to the swap area 160. The method includes the following steps.

Step 401. A compute instance 400 initiates an access request, where the access request carries a virtual address of a target page. The access request is used to request to obtain data on the target page.

Step 402. An MMU obtains the access request, and queries a related PTE in a PT corresponding to the compute instance 400.

After obtaining the access request, the MMU may query the PT corresponding to the compute instance 400. Because the target page has been swapped to a swap area 160 previously, the PT has no PTE corresponding to the target page (PTE that records the virtual address of the target page), and the MMU may find that the PT lacks a page table entry.

If the MMU does not find the related PET in the PT corresponding to the compute instance 400, the MMU triggers the following two procedures: A procedure is a page remapping procedure of a host operating system 200 (referring to step 403 to step 405). In the procedure, the host operating system 200 needs to reconfigure internal memory space for the data on the target page, to be specific, search an internal memory 120 of a host 10 for a blank page (a free page) for the data on the target page. The other procedure is a page swap in procedure of an acceleration apparatus 150 (referring to step 406 to step 409). In the procedure, the acceleration apparatus 150 obtains the target page from the swap area 160, and writes the target page to the internal memory 120 of the host 10. The two procedures may be synchronized.

Procedure 1: Page remapping procedure of the host operating system 200 (referring to step 403 to step 405).

Step 403. The MMU sends, to the host operating system 200, an exception signal indicating a page fault.

Step 404. The host operating system 200 allocates internal memory space to the target page, and updates the PT corresponding to the compute instance 400.

The host operating system 200 allocates the internal memory space to the target page in the internal memory 120 of the host 10, and a physical address of the internal memory space is a new physical address of the target page.

The host operating system 200 adds a PTE to the PT corresponding to the compute instance 400, and the PTE records a correspondence between the virtual address of the target page and the new physical address of the target page.

Step 405. The host operating system 200 notifies the acceleration apparatus 150 that page allocation is completed, to be specific, the host operating system 200 notifies the acceleration apparatus 150 that the storage space has been reallocated to the target page in the internal memory 120 of the host 10, and notifies the acceleration apparatus 150 of the new physical address of the target page.

The host operating system 200 notifies, in a plurality of manners, the acceleration apparatus 150 that page allocation is completed. For example, the host operating system 200 sends a notification message through a system bus connected to a DPU 151. The notification message indicates that the storage space has been reallocated to the target page in the internal memory 120 of the host 10, and the notification message further carries the new physical address of the target page.

For another example, a shared internal memory may be disposed between the host operating system 200 and the acceleration apparatus 150. The shared internal memory may be located in the internal memory 120 of the host 10, or may be located in a memory 152 of the acceleration apparatus 150. The shared internal memory 120 is storage space that can be used by both the host operating system 200 and the acceleration apparatus 150. The shared internal memory stores an allocation completion queue (completion queue) jointly maintained by the host operating system 200 and the acceleration apparatus 150. After reallocating the internal memory space to the target page in the internal memory 120 of the host 10 and updating the PT corresponding to the compute instance 400, the host operating system 200 may add a completion indication to the completion queue. The completion indication indicates that page allocation is completed, and the completion indication further carries the new physical address of the target page.

Procedure 2: Page swap in procedure of the acceleration apparatus 150 (referring to step 406 to step 409).

Step 406. The MMU sends a swap in instruction to the acceleration apparatus 150, where the swap in instruction carries the virtual address of the target page. Optionally, the swap in instruction further carries an identifier of the compute instance 400.

Step 407. The acceleration apparatus 150 determines a swap address of the target page based on the virtual address of the target page.

The acceleration apparatus 150 may obtain a correspondence between the virtual address of the target page and the swap address of the target page, and determine the swap address corresponding to the virtual address of the target page.

The correspondence between the virtual address of the target page and the swap address of the target page may be recorded by the host operating system 200, for example, recorded by the host operating system 200 in step 305 in the embodiment shown in FIG. 3. The acceleration apparatus 150 may obtain the correspondence between the virtual address of the page and the swap address of the page from the host operating system 200. For example, the acceleration apparatus 150 may obtain, from the host operating system 200, a page swap table maintained by the host operating system 200.

Alternatively, the correspondence between the virtual address of the target page and the swap address of the target page may be recorded by the acceleration apparatus 150, for example, recorded by the acceleration apparatus 150 in step 305 in the embodiment shown in FIG. 3. For example, the acceleration apparatus 150 queries the correspondence between the virtual address of the target page and the swap address of the target page from a page swap table.

Step 408. The acceleration apparatus 150 obtains the target page from the swap area 160 based on the swap address of the target page.

The acceleration apparatus 150 sends a third data request to a storage device 20 in which the swap area 160 is located. The third data request is used to request to obtain the target page from the storage device 20, and the third data request carries the swap address of the target page.

After receiving the third data request, the storage device 20 determines, based on the swap address of the target page, a storage location at which the target page is stored, reads the target page from the storage location, and feeds back the target page to the acceleration apparatus 150.

Step 409. After receiving the notification from the host operating system 200, the acceleration apparatus 150 writes the target page to the internal memory 120 of the host 10, and notifies the MMU that page swap in is completed.

The acceleration apparatus 150 may receive the notification message of the host operating system 200, and determine that the host operating system 200 has reallocated the internal memory space to the target page. The acceleration apparatus 150 may write the target page to the new physical address through direct memory access (direct memory access, DMA) based on the new physical address that is of the target page and that is carried in the notification message. After writing the target page to the new physical address, the acceleration apparatus 150 notifies the MMU that page swap in is completed.

Alternatively, the acceleration apparatus 150 may check whether the completion indication exists in the allocation completion queue of the shared internal memory. If the completion indication exists in the allocation completion queue, the acceleration apparatus 150 extracts the completion indication, to obtain the new physical address of the target page. The acceleration apparatus 150 may write the target page to the new physical address through DMA based on the new physical address of the target page. After writing the target page to the new physical address, the acceleration apparatus 150 notifies the MMU that page swap in is completed. If the completion indication does not exist in the allocation completion queue, the acceleration apparatus 150 may defer writing the target page to the internal memory 120 of the host 10 until detecting that the completion indication appears in the allocation completion queue.

When the acceleration apparatus 150 swaps the page from the swap area 160 to the internal memory 120 of the host 10, when the target page obtained by the acceleration apparatus 150 from the swap area 160 may be the target page, to be specific, the target page is not compressed, the acceleration apparatus 150 may directly swap the target page to the internal memory 120 of the host 10. When the target page obtained by the acceleration apparatus 150 from the swap area 160 is a compressed target page, and the target page may be compressed by the acceleration apparatus 150 before the target page is swapped to the swap area 160, or may be compressed by the storage device 20 in which the swap area 160 is located after the target page is swapped to the swap area 160, the acceleration apparatus 150 may first decompress the compressed target page to obtain the target page, and swap the target page to the internal memory 120 of the host 10.

At this point, the target page is swapped from the swap area 160 to the internal memory 120 of the host 10.

After receiving the notification of the acceleration apparatus 150, the MMU obtains an updated PT corresponding to the compute instance 400, searches for the PTE that records the virtual address of the target page, obtains the target page from the internal memory 120 of the host 10, and feeds back the target page to the compute instance 400.

The MMU searches the updated PT for the PTE that records the virtual address of the target page, determines the new physical address of the target page, reads the target page from the new physical address, and feeds back the target page to the compute instance 400.

It should be noted that, in embodiments of this application, swap out of the target page and swap out of the target page are specific to the data on the target page. For ease of description, in embodiments of this application, the target page indicates the data on the target page.

Based on a same inventive concept as the method embodiment, an embodiment of this application further provides a page swap in apparatus. The page swap in apparatus is configured to perform the method performed by the DPU 151 or the acceleration apparatus 150 in the method embodiment shown in FIG. 3 or FIG. 4. For related features, refer to the foregoing method embodiment. Details are not described herein again. As shown in FIG. 5, a page swap in apparatus 500 includes a receiving module 501 and a swap in module 502. Optionally, the apparatus may further include a swap out module 503.

The receiving module 501 is configured to receive a swap in instruction, where the swap in instruction instructs to swap a target page to an internal memory of a host.

The swap in module 502 is configured to: obtain the target page from a storage device; and swap the target page to the internal memory, and notify the host that the target page has been swapped to the internal memory.

In a possible implementation, the receiving module 501 may receive the swap in instruction sent by an MMU or a processor in the host. Correspondingly, the swap in module 502 notifies the MMU or the processor of the host that the target page has been swapped to the internal memory.

In a possible implementation, when obtaining the target page from the storage device, the swap in module 502 obtains a correspondence between a virtual address of the target page and a swap address of the target page, where the swap address of the target page is an address of the target page in the storage device. The swap in module 502 determines the swap address of the target page based on the correspondence, and obtains the target page from the storage device based on the swap address of the target page.

In a possible implementation, the correspondence may be recorded when the page swap in apparatus swaps the target page from the internal memory to the storage device. Alternatively, the correspondence may be obtained by the swap in module 502 from the processor of the host.

In a possible implementation, when swapping the target page to the internal memory, the swap in module 502 may receive a notification sent by the processor of the host, where the notification indicates a physical address configured by the processor for the target page in the internal memory. After obtaining the physical address, the swap in module 502 writes the target page to the physical address through DMA.

In a possible implementation, the receiving module 501 receives a swap out instruction sent by the processor of the host, where the swap out instruction instructs to swap the target page in the internal memory of the host to the storage device, and the swap out instruction includes the virtual address of the target page and the target page.

The swap out module 503 swaps the target page to the storage device, and records the correspondence.

In a possible implementation, when the swap in module 502 obtains the target page from the storage device, if the swap in module 502 obtains a compressed target page from the storage device, the swap in module 502 may decompress the compressed target page to obtain the target page, and then swap the target page to the internal memory.

In a possible implementation, when swapping the target page to the storage device, the swap out module 503 may compress the target page, and then swap a compressed target page to the storage device.

It should be noted that, in this embodiment of this application, module division is an example, and is merely logical function division. During actual implementation, there may be another division manner. Functional modules in this embodiment of this application may be integrated into one processing module, each of the modules may exist alone physically, or two or more modules may be integrated into one module. The integrated module may be implemented in a form of hardware, or may be implemented in a form of a software functional module.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, including a set of one or more usable media. The usable medium may be a magnetic medium (for example, a floppy disk, a hard disk, or a magnetic tape), an optical medium (for example, a DVD), or a semiconductor medium. The semiconductor medium may be a solid state disk (solid state disk, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or the another programmable device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to this application without departing from the scope of this application. In this way, this application is also intended to cover these modifications and variations to this application provided that they fall within the scope of the claims of this application and equivalent technologies thereof.

## Claims

1. A page swap in/out method, wherein the method comprises:
receiving, by an acceleration apparatus, a swap in instruction sent by a host, wherein the swap in instruction instructs to swap a target page to an internal memory of the host, and the acceleration apparatus is connected to the host through a system bus;
obtaining, by the acceleration apparatus, the target page from a storage device; and
swapping, by the acceleration apparatus, the target page to the internal memory, and notifying the host that the target page has been swapped to the internal memory.

2. The method according to claim 1, wherein the receiving, by an acceleration apparatus in a host, a swap in instruction comprises:
receiving, by the acceleration apparatus, the swap in instruction sent by a memory management unit MMU in the host.

3. The method according to claim 1 or 2, wherein the obtaining, by the acceleration apparatus, the target page from a storage device comprises:
obtaining, by the acceleration apparatus, a correspondence between a virtual address of the target page and a swap address of the target page, wherein the swap address of the target page is an address of the target page in the storage device;
determining, by the acceleration apparatus, the swap address of the target page based on the correspondence; and
obtaining, by the acceleration apparatus, the target page from the storage device based on the swap address of the target page.

4. The method according to claim 3, wherein the correspondence is recorded when the acceleration apparatus swaps the target page from the internal memory to the storage device.

5. The method according to any one of claims 1 to 4, wherein the host further comprises a processor, the acceleration apparatus is connected to the processor through a system bus, and the swapping, by the acceleration apparatus, the target page to the internal memory comprises:
receiving, by the acceleration apparatus, a notification sent by the processor, wherein the notification indicates a physical address configured by the processor for the target page in the internal memory; and
writing, by the acceleration apparatus, the target page to the physical address through direct memory access DMA.

6. The method according to claim 5, wherein before the receiving, by an acceleration apparatus, a swap in instruction, the method further comprises:
receiving, by the acceleration apparatus, a swap out instruction sent by the processor of the host, wherein the swap out instruction instructs to swap the target page in the internal memory of the host to the storage device, and the swap out instruction comprises the virtual address of the target page and the target page; and
swapping, by the acceleration apparatus, the target page to the storage device, and recording the correspondence.

7. The method according to any one of claims 1 to 6, wherein the obtaining, by the acceleration apparatus, the target page from a storage device comprises:
obtaining, by the acceleration apparatus, a compressed target page from the storage device; and
decompressing, by the acceleration apparatus, the compressed target page to obtain the target page.

8. The method according to claim 6, wherein the swapping, by the acceleration apparatus, the target page to the storage device comprises:
compressing, by the acceleration apparatus, the target page, and then swapping a compressed target page to the storage device.

9. The method according to claim 3, wherein the correspondence is obtained by the acceleration apparatus from a processor of the host, and the acceleration apparatus is connected to the processor through a system bus.

10. The method according to any one of claims 1 to 9, wherein the storage device is a storage device that is deployed outside the host and that is connected to the host through a network, is a local storage device of the host, or is storage space allocated to the host in a public cloud or a private cloud.

11. A page swap in apparatus, wherein the apparatus is located in a host, and the apparatus comprises:
a receiving module, configured to receive a swap in instruction, wherein the swap in instruction instructs to swap a target page to an internal memory of the host; and
a swap in module, configured to: obtain the target page from a storage device; and swap the target page to the internal memory, and notify the host that the target page has been swapped to the internal memory.

12. The apparatus according to claim 11, wherein the receiving module is configured to:
receive the swap in instruction sent by a memory management module MMU in the host.

13. The apparatus according to claim 11 or 12, wherein when obtaining the target page from the storage device, the swap in module is configured to:
obtain a correspondence between a virtual address of the target page and a swap address of the target page, wherein the swap address of the target page is an address of the target page in the storage device;
determine the swap address of the target page based on the correspondence; and
obtain the target page from the storage device based on the swap address of the target page.

14. The apparatus according to claim 13, wherein the correspondence is recorded when the swap in module swaps the target page from the internal memory to the storage device.

15. The apparatus according to any one of claims 11 to 14, wherein when swapping the target page to the internal memory, the swap in module is configured to:
receive a notification sent by a processor of the host, wherein the notification indicates a physical address configured by the processor for the target page in the internal memory; and
write the target page to the physical address through direct memory access DMA.

16. The apparatus according to claim 15, wherein the apparatus further comprises a swap out module;
the receiving module is further configured to receive a swap out instruction sent by the processor of the host, wherein the swap out instruction instructs to swap the target page in the internal memory of the host to the storage device, and the swap out instruction comprises the virtual address of the target page and the target page; and
the swap out module is configured to: swap the target page to the storage device, and record the correspondence.

17. The apparatus according to any one of claims 11 to 16, wherein when obtaining the target page from the storage device, the swap in module is configured to:
obtain a compressed target page from the storage device; and
decompress the compressed target page to obtain the target page.

18. The apparatus according to claim 16, wherein when swapping the target page to the storage device, the swap out module is configured to:
compress the target page, and then swap a compressed target page to the storage device.

19. The apparatus according to claim 13, wherein the correspondence is obtained by the swap in module from a processor of the host.

20. The apparatus according to any one of claims 11 to 19, wherein the storage device is a storage device that is deployed outside the host and that is connected to the host through a network, is a local storage device of the host, or is storage space allocated to the host in a public cloud or a private cloud.

21. An acceleration apparatus, wherein the acceleration apparatus comprises a data processing unit DPU and a power supply circuit, the power supply circuit is configured to supply power to the DPU, and the DPU is configured to perform the method according to any one of claims 1 to 10.

22. A computer storage medium, wherein the computer-readable storage medium stores computer-executable instructions, and the computer-executable instructions are used to enable a computer to perform the method according to any one of claims 1 to 10.
